# EUROPEAN PATENT APPLICATION

(11) **EP 4 647 204 A1**
(43) Date of publication of application: **12.11.2025**
(21) Application number: 25173174.1
(22) Date of filing: 29.04.2025
(51) Int. Cl.: B23K 26/06, B23K 26/20, B23K 26/26, B23K 26/28, B23K 26/70, B23K 101/04, B23K 101/36, B23K 103/10

(54) **JIG FOR LASER WELDING AND METHOD OF MANUFACTURING BATTERY**

(30) Priority: 08.05.2024 JP 2024075759
(71) Applicant: Prime Planet Energy & Solutions, Inc., Chuo-ku, Tokyo 103-0022 (JP)
(72) Inventor: KAWASHIMA, Naoya, Tokyo, 103-0022 (JP)
(74) Representative: Kuhnen & Wacker Patent- und Rechtsanwaltsbüro PartG mbB

(57) **Abstract**

A jig (2) for laser welding is usable when performing laser welding by applying laser light to a welding-target portion (115), and includes: an accommodation portion (10) that is able to receive the welding-target portion (115) along a first direction; and an inclined surface (20) extending in a peripheral direction so as to surround the welding-target portion (115) around an axis in the first direction, wherein the inclined surface (20) is able to reflect, in a second direction intersecting the first direction, the laser light emitted toward the jig (2) for laser welding, so as to orient the laser light toward the welding-target portion (115).

## Description

### CROSS REFERENCE TO RELATED APPLICATIONS

This nonprovisional application is based on Japanese Patent Application No. 2024-075759 filed on May 8, 2024 with the Japan Patent Office, the entire contents of which are hereby incorporated by reference.

### BACKGROUND OF THE INVENTION

### Field of the Invention

The present technology relates to a jig for laser welding and a method of manufacturing a battery.

### Description of the Background Art

Japanese Patent Laying-Open No. 2015-163412 discloses that two members to constitute a housing of a battery are joined by laser welding.

### SUMMARY OF THE INVENTION

When laser light used for joining reaches inside of the housing, the laser light may affect an electrode assembly accommodated in the housing. On the other hand, it is also required to suppress the laser welding step from being complicated.

An object of the present technology is to provide a jig for laser welding and a method of manufacturing a battery so as to obtain a laser-welded portion having high reliability while suppressing a laser welding step from being complicated.

The present technology provides the following jig for laser welding and the following method of manufacturing a battery.
[1] A jig for laser welding, the jig for laser welding being usable when performing laser welding by applying laser light to a welding-target portion, the jig for laser welding comprising: an accommodation portion that is able to receive the welding-target portion along a first direction; and an inclined surface extending in a peripheral direction so as to surround the welding-target portion around an axis in the first direction, wherein the inclined surface is able to reflect, in a second direction intersecting the first direction, the laser light emitted toward the jig for laser welding, so as to orient the laser light toward the welding-target portion.
[2] The jig for laser welding according to [1], comprising: a base member; and a coating layer provided on a surface of the base member located at the inclined surface, the coating layer being more excellent in reflection property for the laser light than the base member.
[3] The jig for laser welding according to [1] or [2], wherein the accommodation portion and the inclined surface are constituted of a single metal member.
[4] The jig for laser welding according to any one of [1] to [3], further comprising an ejection port via which an inert gas is able to be ejected toward the welding-target portion.
[5] A method of manufacturing a battery, the method comprising: preparing a case main body provided with an opening that is opened in the first direction, and a sealing body that seals the opening; providing the jig for laser welding according to any one of [1] to [4], so as to surround a joining portion between the case main body and the sealing body; and performing laser welding onto the case main body and the sealing body by using laser light emitted from a laser apparatus toward the inclined surface of the jig for laser welding and reflected in the second direction at the inclined surface, the laser apparatus being arranged side by side with the jig for laser welding in the first direction.
[6] The method of manufacturing a battery according to [5], wherein the laser apparatus includes an optical device of a scanning optical system or beam rotator system.
[7] The method of manufacturing a battery according to [5] or [6], comprising: reflecting, at the inclined surface, the laser light from the laser apparatus; and reflecting, at the inclined surface, other light having a wavelength different from a wavelength of the laser light.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front view of a jig for laser welding.
Fig. 7 is a cross sectional view along VII-VII in Fig. 6.
Fig. 8 is a schematic diagram showing a configuration of a laser welding apparatus.
Fig. 9 is a cross sectional view showing an exemplary shape of a sealing plate.
Fig. 10 is a cross sectional view showing another exemplary shape of the sealing plate.
Fig. 11 is a first diagram showing a laser welding step.
Fig. 12 is a second diagram showing the laser welding step.
Fig. 13 is a third diagram showing the laser welding step.
Fig. 14 is a diagram for illustrating a position of application of laser light.
Fig. 15 is a diagram showing a jig for laser welding according to a modification.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in each of the figures, an X direction is defined as a long-side direction (direction of the longest side) of an electrode assembly included in the secondary battery. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the specification of the present application, the Y direction may be referred to as a "thickness direction" of the secondary battery or the case main body, the Z direction may be referred to as a "height direction" of the secondary battery or the case main body, and the X direction may be referred to as a "width direction" of the secondary battery or the case main body.

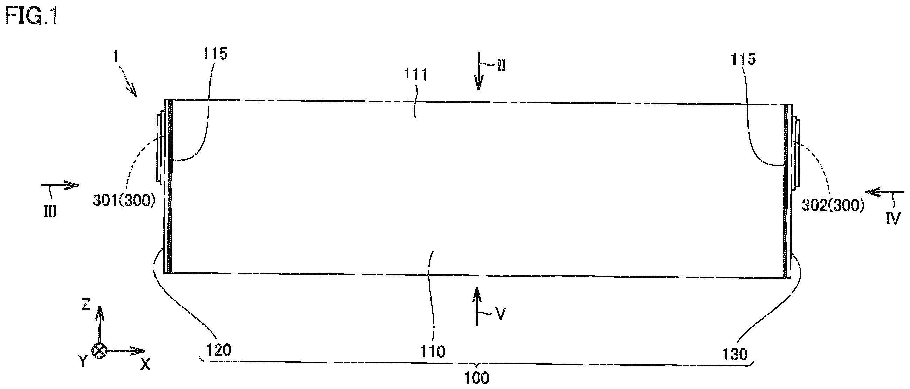

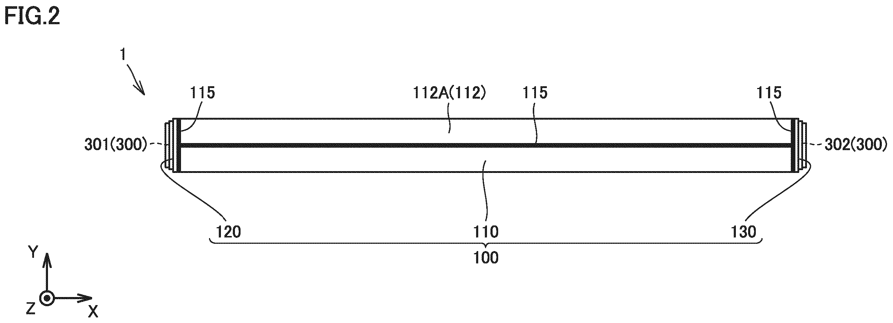

Fig. 1 is a front view of a secondary battery 1 according to one embodiment. Figs. 2 to 5 are diagrams showing states of secondary battery 1 (non-aqueous electrolyte secondary battery) shown in Fig. 1 when viewed in directions of arrows II, III, IV, and V respectively.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 5, secondary battery 1 (prismatic secondary battery) includes a case 100 (battery case), an electrode assembly (not shown), and electrode terminals 300. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together by laser welding. Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

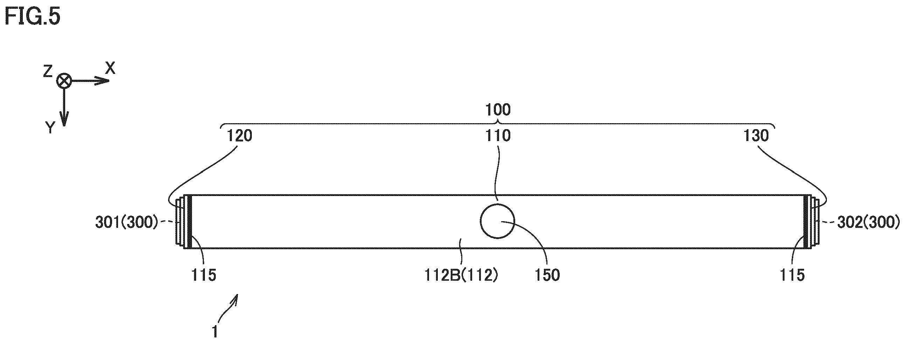

As shown in Fig. 5, a gas-discharge valve 150 is provided in one second side surface portion 112B (first wall portion) of the pair of second side surface portions 112. In the example of Fig. 5, gas-discharge valve 150 is provided at a central portion of secondary battery 1 in the width direction (X direction). In the present embodiment, gas-discharge valve 150 is provided in a wall surface different from sealing plates 120, 130. The position and shape of gas-discharge valve 150 can be appropriately changed.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112A (second wall portion) of the pair of second side surface portions 112. Joining portion 115 extends in the width direction (X direction) of secondary battery 1. At joining portion 115, the end sides of the plate-shaped member constituting case main body 110 are joined to each other.

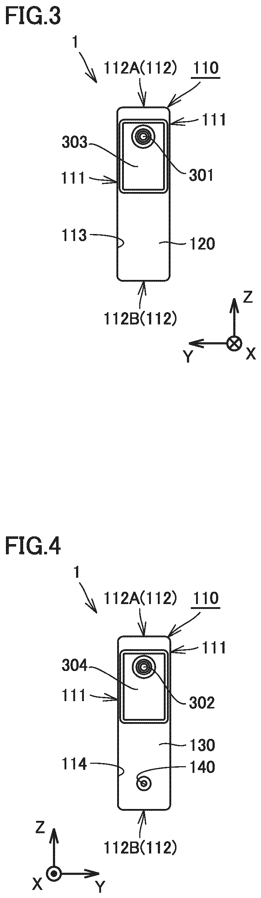

As shown in Fig. 3, an opening 113 (first opening) is provided at an end portion of case main body 110 on a first side in the X direction. Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. It should be noted that the substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the X direction. That is, opening 114 is located at an end portion opposite to opening 113, and openings 113, 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 140. The positions of positive electrode terminal 302 and injection hole 140 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of the electrode assembly (not shown). Negative electrode terminal 301 is attached to sealing plate 120, i.e., case 100.

Positive electrode terminal 302 (second electrode terminal) is electrically connected to a positive electrode of the electrode assembly (not shown). Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 140 is sealed by a sealing member (not shown). As the sealing member, for example, a blind rivet or another metal member can be used.

The following describes a laser welding step of forming joining portion 115 between case main body 110 and each of sealing plates 120, 130, as well as a jig for laser welding as used in the step. It should be noted that the laser welding according to the present technology is not limited to laser welding applied to the formation of joining portion 115 illustrated in Figs. 1 to 5. Furthermore, the laser welding according to the present technology is not limited to laser welding applied to manufacturing of secondary batteries.

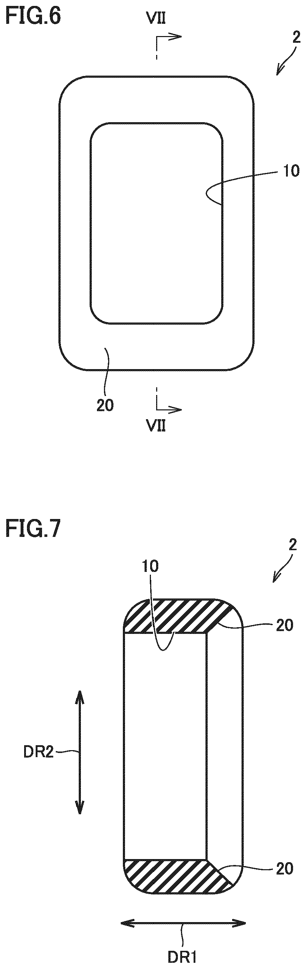

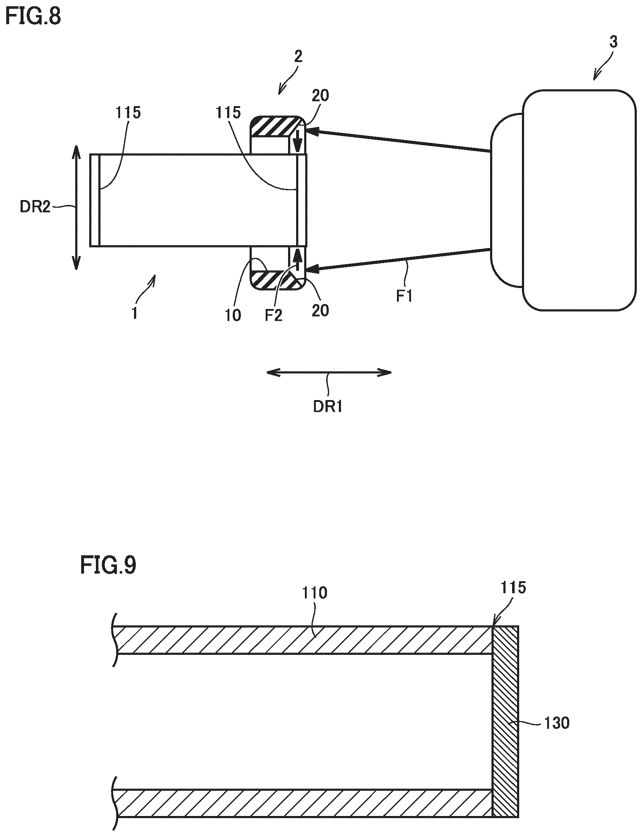

Fig. 6 is a front view of a jig 2 for laser welding, and Fig. 7 is a cross sectional view along VII-VII in Fig. 6. Fig. 8 is a schematic diagram showing a configuration of a laser welding apparatus including jig 2 for laser welding.

As shown in Figs. 6 and 7, jig 2 for laser welding includes an accommodation portion 10 and an inclined surface 20. Accommodation portion 10 is constituted of a through hole formed along a direction of arrow DR1. Inclined surface 20 extends in a direction obliquely intersecting the direction of arrow DR1. Moreover, inclined surface 20 extends in a peripheral direction so as to surround joining portion 115 around an axis in the direction of arrow DR1.

As shown in Fig. 8, jig 2 for laser welding can be used when performing laser welding onto joining portion 115 between case main body 110 and each of sealing plates 120, 130. On this occasion, accommodation portion 10 can receive joining portion 115 along the direction of arrow DR1 (first direction).

Inclined surface 20 can reflect, in a direction of arrow DR2 (second direction) intersecting the direction of arrow DR1, laser light F1 emitted from laser apparatus 3 toward jig 2 for laser welding. It should be noted that the direction of arrow DR1 and the direction of arrow DR2 are typically substantially orthogonal to each other, but the scope of the present technology is not limited thereto.

A base member of jig 2 for laser welding may be composed of a metal material (for example, Cu (copper) or the like) having heat resistance against the laser light. Accommodation portion 10 and inclined surface 20 of jig 2 for laser welding may be constituted of a single metal member or may be constituted of a combination of a plurality of members.

A coating layer more excellent in reflection property for the laser light than the base member may be provided on a surface of inclined surface 20. Examples of the coating layer excellent in reflection property include a metal layer (Au (gold), Ag (silver), Al (aluminum), or the like), a dielectric multilayer film, and the like.

It should be noted that the dielectric multilayer film is a coating film in which a transparent film having a high refractive index (for example, TiO₂, HfO₂, or the like) and a transparent film having a low refractive index (SiO₂, MgF₂) are alternately stacked to attain a thickness corresponding to a phase of 90° (1/4 phase).

Laser apparatus 3 is provided side by side with jig 2 for laser welding in the direction of arrow DR1. Laser apparatus 3 may include an optical device of a scanning optical system or beam rotator system.

Laser apparatus 3 emits laser light F1 toward inclined surface 20 of jig 2 for laser welding. Laser light F1 is reflected at inclined surface 20 and becomes laser light F2 oriented in the direction of arrow DR2. A focal length is set to obtain a predetermined output at joining portion 115.

In addition to reflecting, at inclined surface 20, laser light F1 from laser apparatus 3, other light (for example, light for OCT (Optical Coherence Tomography)) having a wavelength different from that of the laser light may be reflected at inclined surface 20.

The wavelength of the laser light is, for example, about 180 nm or more and 10800 nm or less (more preferably, about 1030 nm or more and 1080 nm or less). The wavelength of the light for OCT is, for example, about 800 nm or more and 1500 nm or less (more preferably, about 800 nm or more and 900 nm or less). The wavelength of the light for OCT can be set so as not to overlap with the wavelength of the laser light.

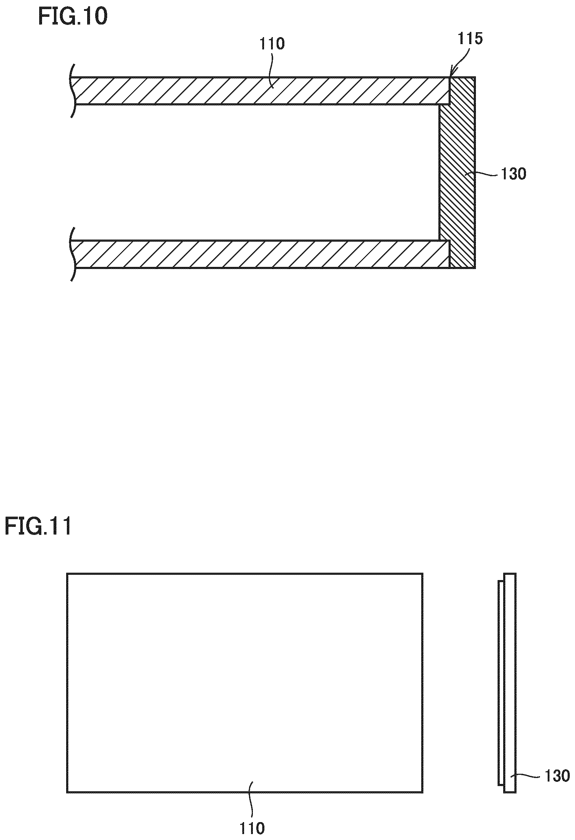

Figs. 9 and 10 are cross sectional views showing exemplary shapes of sealing plate 130. Sealing plate 130 may be provided outside case main body 110 as in the example of Fig. 9, or a portion of sealing plate 130 may be inserted inside case main body 110 as in the example of Fig. 10.

Next, a method of manufacturing secondary battery 1, which includes a laser welding step using jig 2 for laser welding, will be described with reference to Figs. 11 to 14.

As shown in Fig. 11, case main body 110 provided with openings 113, 114 (openings) and sealing plate 130 (sealing body) that seals each of openings 113, 114 are prepared. The electrode assembly (not shown) is accommodated in case main body 110.

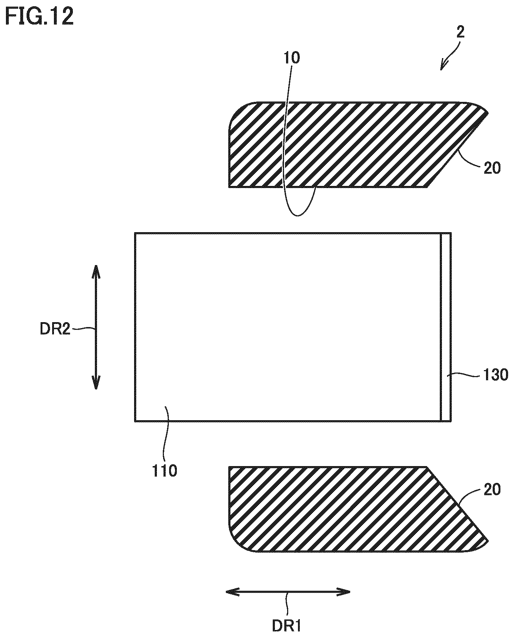

Next, as shown in Fig. 12, jig 2 for laser welding is provided to surround joining portion 115 between case main body 110 and sealing plate 130.

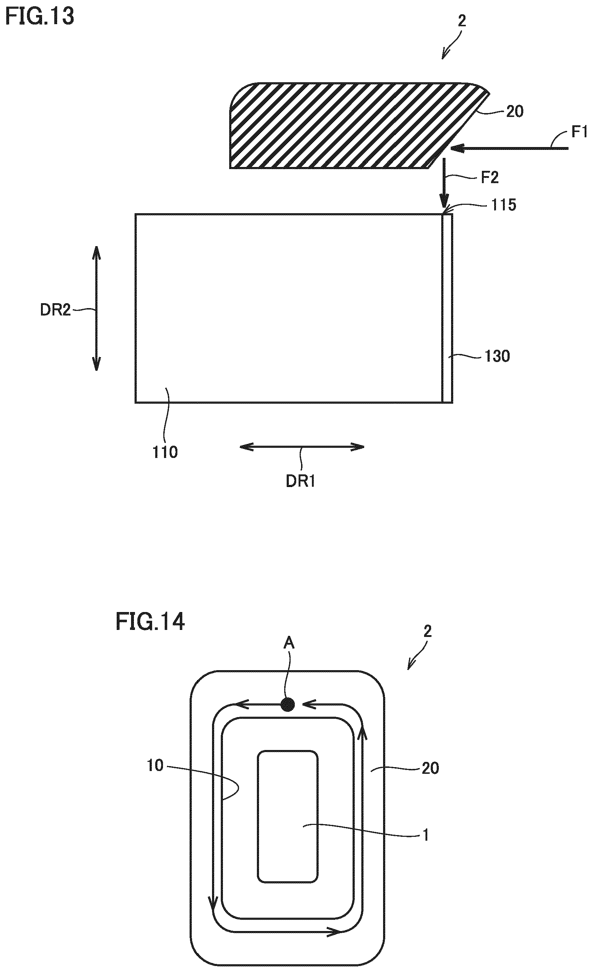

Next, laser apparatus 3 emits laser light F1 toward inclined surface 20 of jig 2 for laser welding so as to perform laser welding onto case main body 110 and sealing plate 130 by laser light F2 reflected at inclined surface 20 in the direction of arrow DR2 as shown in Fig. 13.

As shown in Fig. 14, laser light F1 is first applied to an application start point A and is then applied to move around on inclined surface 20 extending in the peripheral direction.

With jig 2 for laser welding according to the present embodiment, since the laser light can be applied to joining portion 115 at any angle by reflecting the laser light at inclined surface 20 to change the direction of the laser light, it is possible to obtain a laser-welded portion having high reliability while suppressing increased size of a manufacturing facility and increased takt time.

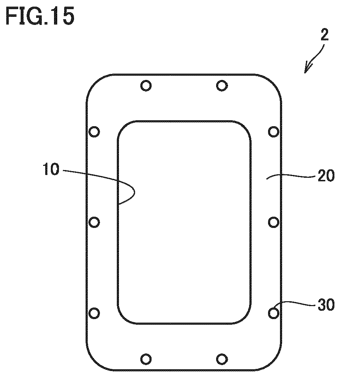

Fig. 15 is a diagram showing a jig 2 for laser welding according to a modification. In the modification of Fig. 15, jig 2 for laser welding has an ejection port 30 via which an inert gas can be ejected toward joining portion 115. By ejecting the inert gas toward the welding-target portion, the reliability of the welding can be further improved.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A jig (2) for laser welding, the jig (2) for laser welding being usable when performing laser welding by applying laser light to a welding-target portion (115), the jig (2) for laser welding comprising:
an accommodation portion (10) that is able to receive the welding-target portion (115) along a first direction; and
an inclined surface (20) extending in a peripheral direction so as to surround the welding-target portion (115) around an axis in the first direction, wherein
the inclined surface (20) is able to reflect, in a second direction intersecting the first direction, the laser light emitted toward the jig (2) for laser welding, so as to orient the laser light toward the welding-target portion (115).

2. The jig (2) for laser welding according to claim 1, comprising: a base member; and a coating layer provided on a surface of the base member located at the inclined surface, the coating layer being more excellent in reflection property for the laser light than the base member.

3. The jig (2) for laser welding according to claim 1 or 2, wherein the accommodation portion (10) and the inclined surface (20) are constituted of a single metal member.

4. The jig (2) for laser welding according to any one of claims 1 to 3, further comprising an ejection port (30) via which an inert gas is able to be ejected toward the welding-target portion (115).

5. A method of manufacturing a battery, the method comprising:
preparing a case main body (110) provided with an opening (113, 114) that is opened in the first direction, and a sealing body (120, 130) that seals the opening (113, 114);
providing the jig (2) for laser welding according to any one of claims 1 to 4, so as to surround a joining portion (115) between the case main body (110) and the sealing body (120, 130); and
performing laser welding onto the case main body (110) and the sealing body (120, 130) by using laser light emitted from a laser apparatus (3) toward the inclined surface (20) of the jig (2) for laser welding and reflected in the second direction at the inclined surface (20), the laser apparatus (3) being arranged side by side with the jig (2) for laser welding in the first direction.

6. The method of manufacturing a battery according to claim 5, wherein the laser apparatus (3) includes an optical device of a scanning optical system or beam rotator system.

7. The method of manufacturing a battery according to claim 5 or 6, comprising: reflecting, at the inclined surface (20), the laser light from the laser apparatus (3); and reflecting, at the inclined surface (20), other light having a wavelength different from a wavelength of the laser light.
